# EUROPEAN PATENT APPLICATION

(11) **EP 1 329 159 A1**
(43) Date of publication of application: **23.07.2003**
(21) Application number: 02001317.3
(22) Date of filing: 18.01.2002
(51) Int. Cl.: A01M 29/02

(54) **Sound generating means for freeing the pathway of moving vehicles**

(71) Applicant: Byrne, Charles Patrick, Roscommon (IE)
(72) Inventor: Byrne, Charles Patrick, Roscommon (IE)
(74) Representative: Weisse, Jürgen, Dipl.-Phys.

(57) **Abstract**

Sound generating means for motor vehicles and trains emitting a sound to chase away animals (14) from the path on which the motor vehicle (10) or train is travelling, wherein the sound is ultrasound with a frequency above the level of human hearing frequency.

## Description

### Technical background

The invention relates to motor vehicles and trains with the possibility of animals entering in pathways on which the motor vehicle or train is travelling. The invention further relates to a method for chasing away animals like dogs, or wild animals from a road or a railway.

### State of the Art

When cars are travelling on major or minor roads, in roral or urban areas where wild or domesticated animals are living (including pets and livestock) there is a permanent danger of the animal walking onto the road and being hit by the vehicle. This is dangerous for the animal and for the car driver. The people in the car can be injured in such an accident, the car can be damaged and the animal usually is killed. Similarly it is dangerous for animals walking on a railway track.

Currently signs are put up to warn the driver to slow down and pay attention when driving through an area with particularily high danger of animals on the road. Fences which can keep animals off the road are very costly and therefore normally not used. There are also dogs running out onto the road and causing unwanted accidents.

In the DE 39 22 156 C2 a device is described which generates pulses with variing frequency up to 5 kHz and variing amplitude and which is used to frighten ferrets biting the cables of a car engine. Such devices are also known to make use of ultrasonic noise to get rid of the ferrets. In the DE 196 14 045 an ultrasonic detector is used for detecting ferrets and the car horn is used to frighten and chase away the animal.

From the DE 197 18 110 A1 a hay harvesting machine is known, which detects human beings and animals in its path and operating range by means of an ultrasonic detector. If the human being or animal is detected an alarm released and/or the engine is switched off. The ultrasound is only used for detection. No means are provided to free the way of the harvesting machine.

In the DE 41 25 402 A1 an ultrasound generator is described which can be installed outside houses in order to frighten and chase away pigeons and other birds. The use of the ultrasound generator with cars is not described.

In the US 5,872,516 a ultrasonic transceiver device for animals is described using ultrasound as a controlling means. The described device uses a receiver which is stuck to the animal. This is not applicable for wild animals such as deer.

None of the known prior art deals with the problem of animals in the pathway of trains or cars.

### Disclosure of the invention

It is an object of the invention to provide a means for warning animals of approching vehicles. It is a further object of the invention to provide a means of chasing animals from a road or a pathway of moving vehicles. It is yet another object of the invention to overcome the above problems without causing disturbances for human beings.

According to the invention this object is achieved with sound generating means for motor vehicles and trains emitting a sound to chase away animals from the path on which the motor vehicle or train is travelling, wherein the sound is ultrasound with a frequency above the level of human hearing frequency.

It has been experienced that an animal will leave a road if the driver of a car blows the horn. However it is normally not possible to blow a horn continuously or frequently without disturbing other people. By using an ultrasound generating means human beings cannot hear the sound and will therefore not be disturbed. A lot of animals, however, have a much larger frequency range for hearing and will therefore hear an approching car with an ultrasound generating means and leave the road.

In an embodiment of the invention the sound is generated continuously. This will allow the animals to hear the ultrasound at all times. The sound generating means can also comprise means for generating a sound with variing amplitudes. This will frighten the animals more and therefore be more effective when chasing them off the road.

In a different embodiment of the invention the means for generating the sound are means for generating the sound in pulses. This has a similar effect as a variing amplitude.

The sound can be generated electrically. In an alternative embodiment the sound is generated by a whistle or other wind generated device, using the wind blowing through the whistle or device as the vehicle or train is travelling. This embodiment has several advantages: it can be easily manufactured. No batteries or other electrical equipment is required. It is not dangerous during handling. The sound generated by such a whistle is louder, when the vehicle is driving faster and stops, when the vehicle stops. The sound level reflects therefore the speed of the vehicle. The animal can hear a faster car earlier and has therefore still sufficient time to leave the road.

In a further embodiment of the invention the whistle is provided with a wind catching means, such as a funnel. This increases the cross section and thereby efficiency of the whistle.

Means to switch it off the sound generating means can be provided. It may be necessary to be able to switch off the sound in residential areas or in areas where many animals are living which cannot enter the road, such as deer farms or the like. These animals will become nervous, if many cars provided with an animal warning system according to the invention pass by. Detecting means for detecting residential areas can be provided for automatic switching off the sound generating means.

The means to switch off the sound generating means are particularily suitable for electrically generated sound, because in towns the speed of the car will be much slower and much less sound would be generated by the wind, so it may not be necessary to turn it off, although it would still be good to have the option of turning off the device.

Further embodiments of the invention are subject to the subclaims. An embodiment of the invention is described hereinafter with reference to the accompanying drawings.

### Brief description of the drawing

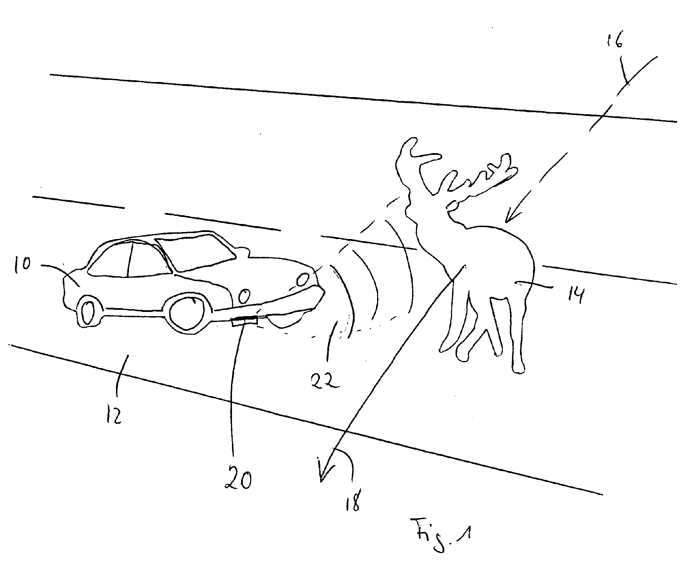

Fig.1 shows a car with a wind operated ultrasonic whistle

### Description of a preferred embodiment

In Fig.1 a car 10 is driving on a road 12. The car is approaching a deer 14. The deer is coming from a direction 16 and walking in an direction 18. An ultrasonic whistle 20 is attached to the bottom front of the car 10. The whistle 20 is wind operated. While the car is driving the air enteres the whistle and produces an ultasonic sound above 20 kHz. The sound travels in a direction 22 and reaches the deer before the car 10. The deer is frightened or at least alerted and will move quicker from the road in an direction 18. Therefore an accident due to the car hitting the deer is prevented.

When entering a residential area a visual detektor (not shown) will detect houses or roadlamps or other signs characteristic of a residential area. The detector sends a signal to a switch connected to the whistle 20. The switch blocks the air from entering the whistle and therefore stopping the whistle to generate any sound. When leaving the residential area a second signal can release the blocking of the air and therefore causing the whistle to produce the sound again.

The sound generator is suitable for freeing the way of a car from all animals, which have a hearing capability in ultrasonic regions. The frequency can be adjusted to match the optimum hearing frequency of the animals. In order to match different such frequencies of different animals, multiple whistles can be provided or sound generating means with varying frequencies.

## Claims

1. Sound generating means for motor vehicles and trains emitting a sound to chase away animals from the path on which the motor vehicle or train is travelling, wherein the sound is ultrasound with a frequency above the level of human hearing frequency.

2. Sound generating means according to claim 1, **characterized in that** the sound is generated continuously.

3. Sound generating means according to claim 1 or 2, **characterized by** means for generating a sound with variing amplitudes.

4. Sound generating means according to claim 1, **characterized by** means for generating the sound in pulses.

5. Sound generating means according to any of the foregoing claims, **characterized in that** the sound is generated electrically.

6. Sound generating means according to any of claims 1 to 4, **characterized in that** the sound is generated by a whistle or other wind operated device, using the wind blowing through the whistle or wind operated device as the vehicle or train is traveling.

7. Sound generating means according to claim 6, **characterized in that** the sound generating means is provided with a wind catching means.

8. Sound generating means according to any of the foregoing claims, **characterized by** means to switch it off.

9. Sound generating means according to claim 8, **characterized by** detecting means for detecting residential areas.

10. Method for chasing away animals like dogs, other pets, domesticated animals or wild animals from a road or a railway **characterized by** generating an ultrasound with a frequency above the level of human hearing frequency.

11. Use of a sound generating means according to one of the claims 1 to 9 for warning animals from entering a road or the pathway of fast moving vehicles.
